# EUROPEAN PATENT APPLICATION

(11) **EP 2 521 088 A1**
(43) Date of publication of application: **07.11.2012**
(21) Application number: 12166492.4
(22) Date of filing: 02.05.2012
(51) Int. Cl.: G06Q 90/00

(54) **System for automated control of data of documents, authenticity of documents and their electronic archiving**

(30) Priority: 04.05.2011 SK 352011
(71) Applicant: ELCOM, spolocnost s rucenim obmedzenym, Presov, 080 01 Presov (SK)
(72) Inventor: Kinik, Slavomír, 080 01 Pre?ov (SK); Kundrát, Milan, 080 01 Pre?ov (SK); Petru?, Miroslav, 080 01 Pre?ov (SK)
(74) Representative: Holoubková, Mária

(57) **Abstract**

The system for automated control of data of documents (D), the authenticity of documents (D) and their electronic archiving consists of a device (11) for creating a document (D) and of a controller (12) belonging to subject (A) of the contractual relations, of an application server (13) and a central store (14) for documents (D) belonging to a subject (C) indirectly concerned in the content of the documents (D) following from the contractual relations of cooperating subjects (A) and (B) and of a device (15) for verifying the authenticity of a document (D). The controller (12) is the dominant component of the system and has a unique identifier.

The invariability of the content of documents (D) electronically archived in the central store for documents (D) allows cooperating subjects to verify the authenticity of the documents (D) in regard to fulfillment of agreements, to verify the behaviour of cooperating subjects and to obtain information about the practices of business partners.

The existence of documents (D) in the central store (14) for documents (D) allows cooperating subjects to look over all documents (D) and to create analyses, statistics and statements.

The system simplifies controlling processes and works preventively on the behaviour of business subjects and for the cultivation of a business environment and civic society.

## Description

### Technical field

The system for automated control of data of documents, authenticity of documents and their electronic archiving falls under the field of inventions, where in the environment of the cooperating subjects of contractual relations and state bodies performing the control of documents proving the results of the contractual relations of the subjects, documents are the basis for application and use of legal regulations. The system allows the automated control of the contents of documents and their authenticity through technical resources which at the same time also perform their electronic archiving in their original unchangeable form.

### Background art

At present a great many of the most varied documents are issued mutually between businesses and between businesses and their customers or between state bodies and citizens. To inspect these documents and to verify their authenticity is possible only through complicated controlling operations which are financially very costly and very time demanding due to the necessity of employing specially qualified personnel who are capable of performing such controls. These are primarily different tax documents such as invoices, cash register documents, delivery notes and similar documents whose existence subsequently results, for example, in the payment or deduction of taxes listed in these documents. In connection with the issuing of a tax document after satisfying the requisite conditions, a subject who received a tax document can, for example, request a tax refund from the relevant state institution. In connection with documents not of a tax-related character, a citizen can request from a state body or some other subject the performing of a service, the supplying of a product or the fulfilling of another obligation. Documents of a non tax-related character for the most part authorise their owner to carry out additional processes relating to the subject which requires the submitting of these documents according to defined regulations.

Because the systems for the control of documents demonstrating the carrying out of contractual relations, most often of tax documents, are at present not automated, a great deal of fraud takes place. In the case of non tax-related documents, time delays of processes which are dependent on the demonstrated ownership of these documents are commonly a problem. The handling of paper documents is cumbersome and their potential loss, which is usually attended by going through a difficult bureaucratic process, requires additional increased costs. At present the archiving and invariability of the content of issued documents is also insufficiently resolved. The period for mandatory archiving of printed documents is time-limited, and after it passes it is again a problem to obtain them because they usually no longer exist.

The systems which do exist at present do not allow the receiver of the issued document to perform any direct control. A customer who receives a document, most often in paper form, doesn't know how to tell whether it is the original document or a falsified one. In the case of tax documents, the financial value from the original document is calculated into the sum from which tax is calculated on the basis of a defined algorithm which the service provider or seller of goods then delivers to the tax collector. The sum on the original document can at present be inspected, but this inspection process is both laborious and time consuming. A falsification, which appears to be an original, does not have to include, as a consequence, the calculation of the financial value from the document to the sum which is the basis for calculating and levying taxes. Similarly, this is also the case with documents subject to customs fees.

The technological solutions to the presented problem which at present do exist are only partial, incomplete and do not make use of the newest technologies.

One of the first solutions aimed at the problem of authenticity of prepared documents, particularly invoices and delivery notes, was published on 20 November 2002 in Greece, in the document POL 1257, registration number 1092819/366/0015. This document describes a fiscal device in which a digital fingerprint is created on the basis of data of a document which the owner of the fiscal device draws up for the needs of another subject, and this document serves as a document about the payment for goods or services. The original document whose authenticity it is necessary to secure is in particular a paper document issued on another device, commonly on a computer. This solution offers the possibility of verifying the authenticity of the document, but it does not allow the simplification and automation of control for all documents. This solution at the same time does not allow the executing of control and verification of created documents in real-time with the help of computing resources nor the discovery of fraud and dishonest practices of business entities in a short time and with high efficiency. The mentioned fiscal device helps to execute a clear control of the authenticity of documents, but only ex-post. Unless a tax inspection is carried out, the solution is not capable, without external intervention, of generating or giving notice of suspicion regarding the existence of falsified documents.

Another solution, which was published on 10 August 2006 in the document PCT WO 2006/083219 Al under the name "SYSTEM AND METHOD FOR REGISTRATION CONTROL" from the Swedish company Axtronic AB, is analogous to the above-mentioned Greek solution, with this difference: that it focuses on controlling the contents of cash register documents which are executed for customers during retail sales, in restaurant facilities and with the provision of services, as defined by the law of the relevant country.

The disadvantage of both mentioned solutions lies particularly in the fact that they do not allow the recipient direct control over the executed document, because the medium on which these documents are delivered to the recipient is paper. The coded data of the document remains stored only on the memory devices of the document issuer, and therefore only an authorised subject can perform a control of the document's authenticity.

Another solution for the control and administration of documents is founded on the use of customer identifiers, is narrowly focused on only one type of documents on the provision of services and the sale of goods, is presented in the Czech Republic in utility model no. 19004 with the name "System for issuing, management and accessing of electronic simplified tax documents" and in the Slovak Republic in utility model no. 5542 with the same name. Its goal is the removal of deficiencies following from the issuing, recording and archiving of paper tax documents, and it deals with simplified tax documents. This solution is founded on the choice and willingness of the seller and requires the customer to have a unique identifier which is not consolidated; from this it follows that customer identifiers can take different forms, e.g. chip cards, contact-free cards, mobile telephones, bar codes, which do not have to be issued from the system operator. The solution in the utility models makes increased demands on the reading devices of sellers and allows the customer to use an unlimited number of identifiers.

### Disclosure of the invention

The invention to a significant measure removes the mentioned deficiencies, where the system for automated control of data of documents, authenticity of documents and their electronic archiving in an environment in which subjects are directly concerned in the content of documents following from their mutual contractual relations and the subject indirectly concerned in the content of the documents following from the contractual relations of the subjects, consists of a device for creating a document and of a controller belonging to the subject of the contractual relations which creates the document, of an application server and a central store for documents belonging to the subject indirectly concerned in the contents of documents following from the contractual relations of the subjects, and of a device for verifying the authenticity of the document, and where data are transmitted through communication channels between the device for creating a document and the controller, between the controller and the application server, between the device for creating a document and the application server, between the application server and the central store for documents and between the application server and the device for verifying the authenticity of the document. The controller is inserted, as the dominant component of the system, into an environment in which there are subjects directly concerned in the contents of documents following from their contractual relations and the subject indirectly concerned in the contents of these documents.

Mandatory components of the controller are as follows: a control unit, a data memory, a programme memory for storing the firmware for controlling the activities of the controller and secured against its unauthorised change, a fiscal memory for storing the summary verification codes, data records about the owner of the controller and the identifier of the controller, which cannot be changed or deleted, a port for communication with the device for creating a document, a real-time circuit for maintaining the current time, which is one of the elements of sets of data for calculation of the digital fingerprint of a document, a backup battery for maintaining the running of the real-time circuit and storing the data memory and protection against unauthorised access to its internal parts.

The controller can also contain a port for communication with the application server, a keyboard and a display for displaying the current state of the running operation and its result, a printer, a port for the reading of data from the data memory and the fiscal memory, and of a slot for a removable storage medium.

The port for communication with the device for creating a document, the device for creating a document itself and the communication channel between the controller and the device for creating a document can substitute the functions of the keyboard, display and port for communication with the application server.

The controller has a unique identifier assigned to it.

The subject of the contractual relations creates for the cooperating subject of the contractual relations a document with a defined structure on the device for creating a document, which it sends to the controller through the communication channel. The control unit calculates from the document data a digital fingerprint of the document and through its encryption using the private key of the subject of contractual relations who created the document or the private key of the controller, it creates a verification code, stores it to the data memory and sends it through the communication channel to the device for the creation of the document. The controller sends the document and the verification code to the application server directly via the communication channel between the controller and the application server or through the device for creating the document via the communication channel between it and the application server, or sends the document through the device for creating the document via the communication channel between it and the application server and the verification code directly via the communication channel between the controller and the application server. The application server checks the completeness and form of the received document data according to the defined structure.

The subject of the contractual relations delivers the document and its verification code to the cooperating subject of the contractual relations. The device for creating the document appends the verification code and the controller identifier to the document data and stores them in its own memory.

The application server verifies the document data on the basis of the verification code, calculates a digital fingerprint of the document with an algorithm used in the controller from the document data and, using the public key of the subject who created the document or the public key of the controller, decrypts the verification code and obtains the original encrypted digital fingerprint of the document. The calculated and decrypted digital fingerprints of the document are compared, and if they are identical, the data of the document and its verification code are stored in the central store for documents.

Data of the document and the verification code of the document are stored in the data memory of the controller until at least the end of the fiscal period which is closed by the successful verification of the summary digital fingerprint of the fiscal period on the application server.

At the end of a fiscal period the controller executes a closing report. In the process of executing a closing report a summary digital fingerprint is calculated in the control unit from the verification codes of the fiscal period and is encrypted using the private key of the subject who executes the closing report or using the private key of the controller; a summary verification code is thus calculated and is then transmitted to the application server through the communication channel along with the date and time of executing the closing report for verification of the summary digital fingerprint of the fiscal period.

Verification of the summary digital fingerprint of the fiscal period is carried out in such a way that the application server calculates, using the algorithm used in the controller from data of the closing report of the fiscal period, the summary digital fingerprint of the fiscal period, and using the public key of the subject who is executing the closing report or the public key of the controller, it decrypts the summary verification code of the fiscal period and thus obtains the originally encrypted summary digital fingerprint of the fiscal period. The calculated and decrypted summary digital fingerprints of the fiscal period are compared and if they are identical, the summary digital fingerprint of the fiscal period is verified on the application server and stored in the central store for documents. The application server encrypts the original summary digital fingerprint of the fiscal period using its own private key and subsequently sends it to the controller. Using the public key of the application server, the controller decrypts the received data and recovers the summary digital fingerprint of the fiscal period. The decrypted summary digital fingerprint of the fiscal period is compared with the original summary digital fingerprint, and if they are identical, the controller writes the summary verification code of the fiscal period into the fiscal memory and closes the fiscal period.

If the calculated summary digital fingerprint of the fiscal period and the decrypted summary digital fingerprint of the fiscal period are not identical, the application server does not verify the integrity and authenticity of the data of the current fiscal period, and the controller does not accept the data of documents of the subsequent fiscal period, so long as the summary digital fingerprints of the current fiscal period are not identical.

Verification of the authenticity of a document can be performed by comparing the calculated digital fingerprint of the document and the decrypted digital fingerprint of the document from the verification code using the public key of the subject who created the document or the public key of the controller, on which the verification code was created. If the calculated digital fingerprint and the decrypted digital fingerprint are identical, the authenticity of the document is confirmed.

Verification of the authenticity of a document can also be done by verifying the existence of the document in the central store for documents by using the publicly accessible interface - through the communication channel between the application server and an anonymous device for verifying document authenticity. The device for verifying the authenticity of a document can be any electronic device which is capable of communicating with the application server, for example, a computer, a mobile telephone, a cash register terminal, a smartphone, a computer tablet and the like.

Verification of document authenticity through verifying its existence in the central store for documents can be carried out by the subjects of the contractual relations concerned in the content of a document who are registered and logged on to the application server. If a document is stored in a central store for documents, its authenticity is confirmed.

An anonymous subject who knows the identifiers of the subjects of the contractual relations, the document registration number and the date and time of its creation can also verify the authenticity of a document. Increased security for verification of document authenticity can also be achieved by entering the digital fingerprint and/or verification code of the document.

Document data are in particular its contents, registration number, the date and time of its creation, the date and time of its encryption, the identifiers of the subjects of contractual relations and the identifier of the controller.

Data of a closing report of a fiscal period are in particular the identifier of the subject of the contractual relations, the identifier of the controller, the closing report number, the date and time of executing the closing report and the set of verification codes created during the fiscal period.

The digital fingerprint of a document is a set of alphanumeric characters created from the document data according to a defined algorithm.

The verification code is a set of alphanumeric characters created by the asymmetrical encryption of a document's digital fingerprint with the use of a private key.

The summary digital fingerprint of the fiscal period is a set of alphanumeric characters created from data of the closing report of the fiscal period according to a defined algorithm.

The summary verification code of the fiscal period is a set of alphanumeric characters created by the asymmetrical encryption of the summary digital fingerprint of the fiscal period with use of a private key.

The central store for documents is a device for archiving and accessing documents and the verification codes belonging to them.

Verification of the authenticity of documents stored in the central store for documents allows the cooperating subjects of the contractual relations to confirm the authenticity of the documents in regard to the fulfilment of agreements. The guarantee of the invariability of documents stored in the central store for documents allows information about the honesty of the cooperating subjects to be obtained. The existence of documents in the central store for documents allows the cooperating subjects oversight over all of their received and created documents and the creation of different analyses, statistics and statements, because this information is accessible for all registered subjects.

Recipients of documents about transactions carried out by the subjects of contractual relations have the opportunity to verify the behaviour of the cooperating subjects of the contractual relations in regard to fulfilment of agreements and to obtain information about possible fraudulent practices of business partners.

The system for verifying document authenticity which is the subject of this invention acts on the relevant subjects preventively, because a control which is today performed only by state-accredited persons is also indirectly expanded to volunteers from the ranks of recipients of issued documents, which can be helpful in the very complicated controlling process. By using the system for verifying the authenticity and electronic archiving of documents, state institutions can place the obligation to report business fraud onto business entities themselves. At the same time the processes herein presented has an effect on balancing competitive conditions by favouring honest business people. The result of introducing a control system according to the invention is also the cultivation of the business environment.

The continuous transmission of data of documents to the application server during the interval of one fiscal period allows the carrying out of automated running control of documents in real time instantly as their data arrives to the application server. Such a control ensures a more rapid uncovering of fraudulent activities and automatically identifies suspicious operations, thus preventing the origin of even greater damage. At the same time the need is removed for one-time, in-depth control of a great number of documents in a short time period with a corresponding number of trained inspectors.

What's more, the system allows the use of special analytical instruments which on the basis of the structurised content of documents are able through the application server to perform detailed controls also in the scope of mutual ties between two or more subjects, by which it is possible to reveal fraudulent behaviour of organised and mutually interconnected groups of subjects.

The system for automated control of document data, authenticity of documents and their electronic archiving at the same time also contributes to the cultivation of civic society, because it gives citizens the opportunity to become involved in a simple way with the uncovering of dishonest and fraudulent practices which, on the basis of the simplicity of the system herein used, they can discover and point out.

### Brief description of the drawings

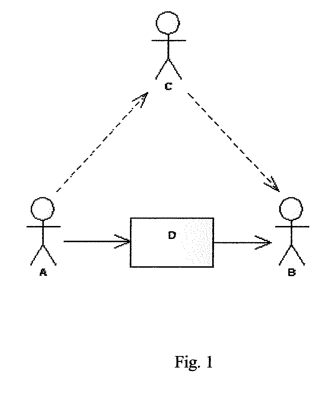

Figure 1. shows the environment in which a controller is inserted between the coexisting subjects directly concerned in the contents of a document following from their contractual relations and from the needs of a subject who is not directly concerned in the contents of their contractual relations but who is impacted by the existence of a document.

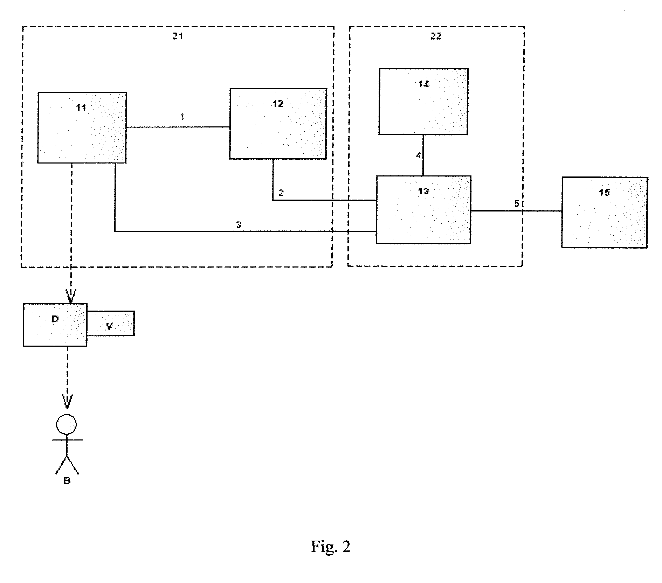

Figure 2. shows a block diagram of the system for automated control of document data, authenticity of documents and their electronic archiving.

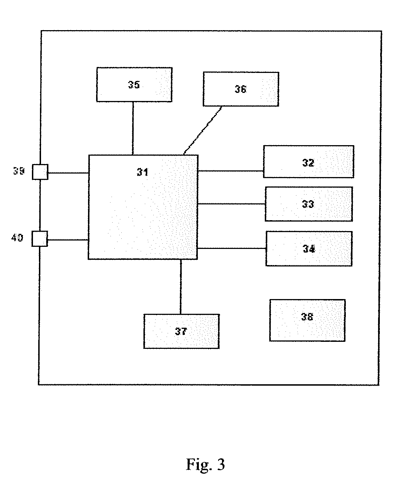

Figure 3. shows a block diagram that clarifies the arrangement of the components of the controller and their interactions.

### Example of carrying out the invention

The system for automated control of data of documents D, authenticity of documents D and their electronic archiving in an environment in which subjects A and B are directly concerned in the content of the documents D following from their mutual contractual relations and the subject C indirectly concerned in the content of the documents D following from the contractual relations of subjects A and B, consists of a device 11 for creating a document D and of a controller 12 belonging to the subject A of the contractual relations, of an application server 13 and a central store 14 for documents D belonging to the subject C indirectly concerned in the content of the documents D following from the contractual relations of the subjects A and B, and of a device 15 for verifying the authenticity of a document D, and the transfer of data between the device 11 for creating a document D and the controller 12 runs through a communication channel 1 between the device 11 for creating a document D and the application server 13 through the communication channel 3; the transfer of data between the controller 12 and the application server 13 runs through the communication channel 2 and transfer of data between the application server 13 and the central store 14 for documents D runs through the communication channel 4 and between the application server 13 and the device 15 for verifying the authenticity of a document D through communication channel 5.

In the system for automated control of data of documents D, the authenticity of documents D and their electronic archiving, a controller 12 is inserted as the dominant component of the system into the environment in which coexist subjects A and B, directly concerned in the content of the documents D following from their contractual relations, and subject C concerned indirectly in the content of these documents.

The controller 12 consists of at least a control unit 31, a data memory 33, a programme memory 32 for storing the firmware for controlling the activities of the controller 12, secured against unauthorised change to the firmware, of a fiscal memory 34 for storing the summary verification codes V, data records about the owner of the controller 12 and the identifier of the controller 12 which cannot be changed or deleted, of a port 39 for communication with the device 11 for creating a document, of a real-time circuit 37 for maintaining the current time, which is one of the elements of the sets of data for calculation of the digital fingerprint of a document D, of a backup battery 38 for maintaining the running of the real-time circuit 37 and the storing of the data memory 33 and of protection against unauthorised access to its internal parts.

The controller 12 can also contain a port 40 for communication with the application server 13, a keyboard 36 and a display 35 for displaying the current state of the running operation and its result, a printer, a port for reading data from the data memory 33 and the fiscal memory 34 and a slot for the removable storage medium.

The port 39 and the device 11 for creating a document D and the communication channel 1 between the controller 12 and the device 11 for creating a document D can substitute for the functions of the keyboard 36, display 35 and port 40.

The controller 12 has a unique identifier assigned to it.

The controller 12 minimally performs the operations:
- creation of a digital fingerprint of a document D and a verification code V,
- creation of a summary digital fingerprint of a fiscal period and a summary verification code,
- the reading of all verification codes V and with them the pertinent documents D from the data memory 33,
- the reading of all summary verification codes from the fiscal memory 34,
- the programming of data about the owner of the controller 12,
- the programming of the controller settings 12,
- the setting of the date and time

The conditions for authorised access to the internal parts of the controller 12 and records about activities performed in the controller 12 are a part of the instruction for use of the controller 12.

Subject A of the contractual relations creates for subject B of the contractual relations on the device 11 for creating a document D a document D with a defined structure which is sent via the communication channel 1 between the device 11 for creating a document D and the controller 12 through the port 39 to the controller 12. The control unit 31 calculates from the data of document D a digital fingerprint of the document D, which it encrypts using the private key of subject A of the contractual relations or the private key of the controller 12, thus creating a verification code V, which is stored into the data memory 33 and is sent via the communication channel 1 to the device 11 for creating a document D. The verification code V and the document D are also sent to the application server 13 via the communication channel 2 directly from the controller 12 or via the device 11 for creating a document D and the communication channel 3 between the device 11 for creating a document D and the application server 13. The application server 13 checks the completeness and form of the received data of the document D according to the defined structure.

Subject A of the contractual relations delivers to subject B of the contractual relations the document D and its verification code V. The device 11 for creating a document D appends the verification code V and the controller identifier 12 to the data of the document D and stores them in its own memory.

The application server 13 verifies the received data of the document D on the basis of the verification code V. From the data of document D it calculates the digital fingerprint using the same algorithm that was used in the controller 12. Using the public key of subject A or the controller 12 it then decrypts the verification code V, thus obtaining the originally encrypted digital fingerprint of document D. Both digital fingerprints, calculated and decrypted, are compared, and if they are identical the data of document D and its verification code V are stored in the central store 14 for documents D. Data of document D and the verification code V are stored in the data memory 33 of the controller 12 until at least the end of the fiscal period which is closed by successful verification of the summary digital fingerprint of the fiscal period on the application server 13.

At the end of the fiscal period, the controller 12 receives from the keyboard 36 or from the device 11 through port 39 a command for executing a closing report. In the process of executing a closing report, a summary digital fingerprint is calculated in the control unit 31 from the verification codes V, which were stored in the data memory 33 during the fiscal period. The summary digital fingerprint from the verification codes V is encrypted using the private key of subject A or the private key of the controller 12, thus creating a summary verification code which together with the date and time of executing the closing report is sent, via the communication channel 2 between the controller 12 and the application server 13 or via the device 11 for creating a document D and the communication channel 3 between the device 11 for creating a document D and the application server 13, to the application server 13 for verification of the summary digital fingerprint of the fiscal period.

Transmission of data of a document D and a verification code V to the application server 13 can be:
a) directly from the controller 12 via the communication channel 2 between the controller 12 and the application server 13,
b) via the device 11 for creating a document D and the communication channel 3 between the device 11 for creating a document D and the application server 13 after confirmation of the identity of the registered owner of the controller 12 and the identity of the controller 12 on the application server 13. The identity of the owner of the controller 12 is secured with the private key that was used to create the verification code V of the document D.
c) a combination of two independent transmissions, namely the transmission of the verification code V directly from the controller 12 via the communication channel 2 between the controller 12 and the application server 13 and the transmission of the document D through the device 11 for creating a document D and the communication channel 3 after confirmation of the identity of the registered owner of the controller 12 and the identity of the controller 12 on the application server 13. The identity of the owner of the controller 12 is secured with the private key that was used to create the verification code V of the document D.

For the presented method of transmitting data of a document D and a verification code V to the application server 13, it applies that if an error is discovered during the check of the completeness and form of the received data of document D or with a failure of verification of the data of document D on the basis of the verification code V, it is necessary to repeat their transmission until the control and the verification of data of document D are no longer flawed; otherwise the document D is not processed and its verification code V is not included among the data of the closing report of the current fiscal period.

For the presented method of transferring data of a document D and a verification code V to the application server 13 it also applies that upon executing a closing report a summary digital fingerprint of the fiscal period is created which is encrypted using the private key of subject A of the contractual relations or the private key of the controller 12, thus creating a summary verification code of the current period. The summary digital fingerprint of the fiscal period created on the controller 12 transmitted in encrypted form to the application server 13 through the summary verification code must be identical with the summary digital fingerprint of the fiscal period which was calculated on the application server 13 for the controller 12. If the summary digital fingerprints of the fiscal period are confirmed as identical on the application server 13, the application server 13 then stores the summary digital fingerprint of the fiscal period in the central store 14 for documents D, encrypts the original summary digital fingerprint of the fiscal period with its own private key and subsequently sends it to the controller 12. The controller 12, using the public key of the application server 13, decrypts the received data and recovers the summary digital fingerprint of the fiscal period. It then compares the decrypted summary digital fingerprint of the fiscal period with the original summary digital fingerprint which it created at the time of the closing report, and if they are identical, the controller 12 writes the summary verification code of the fiscal period into the fiscal memory 34 and closes the fiscal period.

In the case of a discrepancy in the calculated summary digital fingerprint of the fiscal period and the decrypted summary digital fingerprint of the fiscal period, the application server 13 does not confirm the integrity and authenticity of all data of the current fiscal period, and the controller 12 does not accept the data of the documents D of the next fiscal period, so long as the summary digital fingerprint of the fiscal period on the application server 13 are not identical.

A document D is processed by verification of data of the document D by the application server 13. In the case of unsuccessful transmission of data of document D and the verification code V the controller 12 is obligated to send these data to the application server 13 at the latest by the time a closing report of the current fiscal period is executed; otherwise the controller 12 automatically blocks and does not accept data of documents D of the next fiscal period from the device 11 for creating a document D until all data of documents D and their verification codes V related to the current fiscal period are successfully sent to the application server 13.

Verification of the authenticity of a document D can be performed by comparing the calculated digital fingerprint of the document D and the decrypted digital fingerprint of the document D from the verification code V using the public key of subject A or the public key of the controller 12, on which the verification code V was created. If the calculated digital fingerprint of the document D and the decrypted digital fingerprint of the document D are identical, the authenticity of the document D is confirmed.

Verification of the authenticity of a document D is also possible to perform indirectly through verifying of the existence of the document D in the central store 14 for documents D by using the publicly accessible interface through the communication channel 5 between the application server 13 and the device 15 for verifying the authenticity of a document D. If the existence of document D is verified in the central store 14 for documents D, the authenticity of this document D is simultaneously verified.

The device 15 for verifying the authenticity of a document D can be any electronic device which is capable of communicating with the application server, for example, a computer, a mobile telephone, a cash register terminal, a smartphone, a computer tablet and the like. The device 15 operates as an anonymous device whose identity it is not necessary to investigate.

Verification of the authenticity of a document D in the central store 14 for documents D can be carried out anonymously or non-anonymously.

Anonymous verification of the authenticity of a document D can be carried out by any subject who knows the identifiers of subjects A and B, the registration number of the document D and the date and time of its creation. If a higher level of security is required for verification of the document D, it is also possible to request the entering of the digital fingerprint and/or verification code V of the document D. After the mentioned data is entered via the publicly accessible interface through the communication channel 5, information about the existence of document D in the central store 14 for documents D can be obtained from the application server 13.

Non-anonymous verification of a document D is possible only after subject A or B logs on to the application server 13; thus, their identity is verified, but subject A or B must be registered on the application server 13. In this way the registered and logged on subject A or B has other possibilities available, for example, the browsing of all the received and created documents D and the creation of various analyses, statistics and statements which are accessible for all registered subjects.

Data of a document D are in particular its contents, registration number, the date and time of its creation, the date and time of its encryption, the identifiers of the subjects of contractual relations A and B and the identifier of the controller 12.

Data of a closing report of a fiscal period are in particular the identifier of the subject A of contractual relations, the identifier of the controller 12, the closing report number, the date and time of executing the closing report and the set of verification codes V created during the fiscal period.

The digital fingerprint of a document D is a set of alphanumeric characters created from the data of a document D according to a defined algorithm.

The verification code V is a set of alphanumeric characters created by the asymmetrical encryption of the digital fingerprint of a document D with the use of a private key.

The summary digital fingerprint of the fiscal period is a set of alphanumeric characters created from data of the closing report of a fiscal period according to a defined algorithm.

The summary verification code of the fiscal period is a set of alphanumeric characters created by the asymmetrical encryption of a summary digital fingerprint of a fiscal period with use of a private key.

The central store 14 for documents D is a device for archiving and accessing documents D and the verification codes V belonging to them.

### Industrial applicability

The system for automated control of data of documents, the authenticity of documents and their electronic archiving can be used repeatedly with advantages against the approach of subjects who misuse documents following from contractual relations of cooperating subjects in environments which are characterised by legal obligations to guarantee the carrying out of activities on the basis of documents created by the subject of contractual relations.

## Claims

1. The system for automated control of data of documents, the authenticity of documents and their electronic archiving **is characterised in that** in environments in which the subjects (A) and (B) are directly concerned in the content of documents (D) following from their mutual contractual relations and the subject (C) indirectly concerned in the content of documents (D) following from the contractual relations of subjects (A) and (B), it consists of a device (11) for creating a document (D) and a controller (12) belonging to subject (A) of the contractual relations, an application server (13) and a central store (14) for documents (D) belonging to subject (C) indirectly concerned in the content of documents (D) following from the contractual relations of the subjects (A and B) and of a device (15) for verifying the authenticity of a document (D); communication between the device (11) for creating a document (D) and the controller (12) runs through the communication channel (1), between the device (11) for creating a document (D) and the application server (13) through the communication channel (3); communication between the controller (12) and the application server (13) runs through the communication channel (2); communication between the application server (13) and the central store (14) for documents (D) runs through the communication channel (4) and between the application server (13) and the device (15) for verifying the authenticity of a document (D) through the communication channel (5).

2. The system for automated control of data of documents, the authenticity of documents and their electronic archiving, according to claim 1, **is characterised in that** a controller (12) is inserted into the environment in which the subjects (A) and (B) are directly concerned in the content of documents (D) following from their mutual contractual relations and subject (C) is indirectly concerned in the content of documents (D).

3. The system for automated control of data of documents, the authenticity of documents and their electronic archiving, according to claims 1 and 2, **is characterised in that** the controller (12) consists of at least a control unit (31), a data memory (33), a programme memory (32) for storing the firmware for controlling its activities, secured against unauthorised change to the firmware, of a fiscal memory (34) for storing the summary verification codes, records of its identifier and data about its owner which cannot be changed or deleted, of a port (39) for communication with the device (11) for creating a document (D), of a real-time circuit (37) for maintaining the current time, which is one of the elements of the sets of data for calculation of the digital fingerprint of a document (D), of a backup battery (38) for maintaining the running of the real-time circuit (37) and for storing the data memory (33) and of protection against unauthorised access to its internal parts.

4. The system for automated control of data of documents, the authenticity of documents and their electronic archiving, according to claims 1 through 3, **is characterised in that** the controller (12) has a port (40) for communication with the application server (13) and/or a keyboard (36) and/or a display (35) for displaying the current state of the running operation and its result, and/or a printer and/or a port for reading data from the data memory (33) and a fiscal memory (34) and/or has a slot for a removable storage medium.

5. The system for automated control of data of documents, the authenticity of documents and their electronic archiving, according to claims 3 and 4, **is characterised in that** the port (39) for communication with a device (11) for creating a document (D) and the device (11) for creating a document (D) itself and the communication channel (1) replaces in the controller (12) the keyboard (36) and display (35) when the setting of the parameters of the controller (12) and the port (40) for communication with the application server.

6. The system for automated control of data of documents, the authenticity of documents and their electronic archiving, according to claims 3 through 5, **is characterised in that** the controller (12) has a unique identifier assigned to it.

7. The system for automated control of data of documents, the authenticity of documents and their electronic archiving, according to claim 1, **is characterised in that** the subject (A) of the contractual relations creates for the cooperating subject (B) of the contractual relations a document (D) with a defined structure, which is sent via the communication channel (1) to the controller (12); the control unit (31) calculates from the data of the document (D) the digital fingerprint of the document (D), and through its encryption using the the private key of subject (A) of the contractual relations or the private key of the controller (12) it creates a verification code (V), stores it into the data memory (33) and sends it via the communication channel (1) to the device (11) for creating a document (D); the controller (12) sends the document (D) and the verification code (V) to the application server (13) through the communication channel (2) or through the device (11) for creating a document (D) through the communication channel (3) or sends the document (D) through the device (11) for creating a document (D) via the communication channel (3) and a verification code (V) via the communication channel (2).

8. The system for automated control of data of documents, the authenticity of documents and their electronic archiving, according to claims 1 through 7, **is characterised in that** the subject (A) of the contractual relations delivers to the cooperating subject (B) of the contractual relations a document (D) and its verification code (V).

9. The system for automated control of data of documents, the authenticity of documents and their electronic archiving, according to claims 1, 6 and 7, **is characterised in that** the device (11) for creating a document (D) appends the verification code (V) and the identifier of the controller (12) to the data of the document (D) and stores them on its own memory resources.

10. The system for automated control of data of documents, the authenticity of documents and their electronic archiving, according to claims 1 through 7, **is characterised in that** the application server (13) on the basis of a verification code (V) verifies the data of the document (D), calculates with the algorithm used in the controller (12) from data of the document (D) the digital fingerprint of the document (D) and using the public key of the subject (A) of the contractual relations or the public key of the controller (12) decrypts the verification code (V) and obtains the original encrypted digital fingerprint of the document (D) and compares the calculated and decrypted digital fingerprints of the document (D), and if they are identical, stores the data of the document (D) and its verification code (V) in the central store (14) for documents (D).

11. The system for automated control of data of documents, the authenticity of documents and their electronic archiving, according to claims 1 through 7, **is characterised in that** the data of a document (D) and the verification code (V) of the document (D) are stored in the data memory (33) of the controller (12) until at least the end of the fiscal period completed by a closing report, when its summary digital fingerprint is calculated in the control unit (31) from the verification codes of the fiscal period and is then encrypted using the private key of subject (A) of the contractual relations or by using the private key of the controller (12), thus creating the summary verification code, which is transmitted, along with the date and time of executing the closing report, via communication channel (2) or via the device (11) and the communication channel (3) to the application server for verification of the summary digital fingerprint of the fiscal period.

12. The system for automated control of data of documents, the authenticity of documents and their electronic archiving, according to claims 1 through 11, **is characterised in that** verification of the summary digital fingerprint of the fiscal period is carried out such that the application server (13) calculates from data of the closing report of the fiscal period using the algorithm used in the controller (12) a summary digital fingerprint of the fiscal period, and using the public key of the subject (A) of the contractual relations or using the public key of the controller (12) decrypts the summary verification code of the fiscal period, thus obtaining the originally encrypted summary digital fingerprint of the fiscal period, and compares the calculated and decrypted summary digital fingerprint of the fiscal period, and if they are identical, the summary digital fingerprint of the fiscal period is verified on the application server (13) and stored in the central store for documents (14); the application server (13) encrypts the original summary digital fingerprint with its own private key and sends it to the controller (12), which decrypts the received data using the public key of the application server (13) and recovers the summary digital fingerprint of the fiscal period, compares the decrypted summary digital fingerprint of the fiscal period with its original summary digital fingerprint, and if they are identical, the controller (12) writes the summary verification code of the fiscal period into the fiscal memory and closes the fiscal period; if the calculated summary digital fingerprint of the fiscal period and the decrypted summary digital fingerprint of the fiscal period are not identical, the application server (12) does not confirm the integrity and authenticity of data of the current fiscal period, and the controller (12) does not accept the data of the documents (D) of the subsequent fiscal period, so long as summary digital fingerprints of the current fiscal period are not identical.

13. The system for automated control of data of documents, the authenticity of documents and their electronic archiving, according to claims 1 and 7, **is characterised in that** verification of the authenticity of a document (D) is the result of comparing the calculated digital fingerprint of the document (D) and the decrypted digital fingerprint of the document (D) from the verification code (V) by using the public key of the subject (A) of the contractual relation or the public key of the controller (12), on which the verification code (V) was created; if the calculated digital fingerprint of the document (D) and the decrypted digital fingerprint of the document (D) are identical, the authenticity of the document (D) is confirmed.

14. The system for automated control of data of documents, the authenticity of documents and their electronic archiving, according to claims 1 and 7, **is characterised in that** verification of the authenticity of the document (D) is confirmed by its existence in the central store (14) for documents (D).

15. The system for automated control of data of documents, the authenticity of documents and their electronic archiving, according to claims 1 and 7, **is characterised in that** for verification of the authenticity of a document (D) by means of the application server (13) and of the central store (14) for documents (D) an anonymous subject must state at least the identifiers of the subjects (A) and (B) of the contractual relations, the registration number of the document (D), the date and time of creation of the document (D) and with a request for greater security of verification also the digital fingerprint and/or verification code of the document (D).

16. The system for automated control of data of documents, the authenticity of documents and their electronic archiving **is characterised in that** the data of a document (D) are in particular its content, registration number, the date and time of creation of the document (D), the date and time of encryption of the document (D), the identifiers of subjects (A) and (B) of the contractual relations and the identifier of the controller (12).

17. The system for automated control of data of documents, the authenticity of documents and their electronic archiving **is characterised in that** the data of the closing report of the fiscal period are in particular the identifier of subject (A) of the contractual relations, the identifier of the controller (12), the closing report number, the date and time the closing report was executed and the set of verification codes (V) created during the fiscal period.

18. The system for automated control of data of documents, the authenticity of documents and their electronic archiving **is characterised in that** the digital fingerprint of the document (D) is a set of alphanumeric characters created according to a defined algorithm from data of the document (D).

19. The system for automated control of data of documents, the authenticity of documents and their electronic archiving **is characterised in that** the verification code (V) is a set of alphanumeric characters created by the asymmetrical encryption of a digital fingerprint of the document (D) with the use of the private key of subject (A).

20. The system for automated control of data of documents, the authenticity of documents and their electronic archiving **is characterised in that** the summary digital fingerprint of the fiscal period is a set of alphanumeric characters created according to a defined algorithm from the data of the closing report of the fiscal period.

21. The system for automated control of data of documents, the authenticity of documents and their electronic archiving **is characterised in that** the summary verification code of the fiscal period is a set of alphanumeric characters created by the asymmetrical encryption of the summary digital fingerprint of the fiscal period with use of the private key of the subject (A).

22. The system for automated control of data of documents, the authenticity of documents and their electronic archiving **is characterised in that** the central store (14) for documents (D) is a device for the archiving and accessing of documents (D) and the verification codes (V) belonging to them.
